# EUROPÄISCHE PATENTANMELDUNG

(11) **EP 2 592 058 A1**
(43) Veröffentlichungstag der Anmeldung: **15.05.2013**
(21) Anmeldenummer: 11008974.5
(22) Anmeldetag: 11.11.2011
(51) Int. Cl.: C04B 28/02, C04B 14/48, C04B 28/06

(54) **Fertigungsmethode für die Herstellung von Wärmespeichersteinen**

(71) Anmelder: Duda, Juergen, 56244 Vielbach (DE)
(72) Erfinder: Duda, Juergen, 56244 Vielbach (DE)
(74) Vertreter: Preis, Tobias

(57) **Zusammenfassung**

Fertigungsmethode für die Herstellung von Wärmespeichersteinen, durch Beigabe von Kunststofffasern zu der Feuerfest-Betonmischung neben Wasser in einem bestimmten Mischungsverhältnis und durch Beigabe von Edelstahlfasern die gebogene Enden aufweisen in einem bestimmten Mischungsverhältnis der Feuerfest-Betonmischung, und durch Trocknung und nicht Brennen der Wärmespeichersteine .

## Beschreibung

Fertigungsmethode für die Herstellung von Wärmespeichersteinen.

Es gibt neuerdings die Möglichkeit, mit relativ geringem Kosten- und Zeitaufwand öl- oder gasbeheizte Heizkessel oder Ofenanlagen mit Wärmespeichersteinen auszurüsten. Diese Steine welche aus speziellem Feuerfest-Material gefertigt werden, bewirken im Kessel der Heizung - der bisher nur die Luft im Kessel erwärmt hat - einen gewissen Hitzestau. Dieser Hitzestau erhöht den Wirkungsgrad des Kessels und damit eine Reduzierung der benötigten Energiemenge für die Erreichung einer bestimmten Betriebstemperatur.
Desweiteren stellt sich ein weiterer Vorteil ein: Durch die Wärmespeicherfähigkeit der Steine kühlt der Kessel bei ausschalten des Brenners weniger schnell ab. Somit wird erreicht, dass die Heizzyklen des Brenners verlängert werden und dadurch zusätzlich wertvolle Energie gespart wird.

Bei üblichen Herstellungsmethoden von Wärmespeichersteinen werden Feuerfest-Betonmischungen verwendet, wobei die gegossenen Steine keramisch gebrannt werden.

Diese Wärmespeichersteine sind spröde und können leicht auseinanderbrechen. Desweiteren ist der Herstellungsprozess kostenintensiv durch den keramischen Brennvorgang.

Herkömmliche Steine können auch im Laufe ihres Einsatzes Risse bekommen und am Einsatzort im Ofen auseinanderbrechen. Im Produktionsprozess sind weiterhin Kosten einzusparen, in dem Kosten- und energieintensive Fertigungsmethoden vermieden werden.

Das Material der Steine muss temperaturwechselbeständig sein um vorzeitigen Verschleiß zu verhindern. Zudem muss es hitzebeständig sein. Desweiteren sollte das Raumgewicht des Materials möglichst hoch sein um die Wärmespeicherkapazität im Stein zu erhöhen.

Diese Probleme werden mit den in den Patentansprüchen 1. aufgeführten Merkmalen gelöst.

Mit der Erfindung soll erreicht werden, dass eine Fertigungsmethode für die Herstellung von Wärmespeichersteinen geschaffen wird, die eine einfache und kostengünstige Herstellung von hitzebeständigen, temperaturwechselbeständigen Wärmespeichersteinen mit hoher Wärmespeicherkapazität gewährleistet.

Die im Patentanspruch beschriebene Verwendung der Kunststofffasern in bestimmter Mischung hat den Vorteil, dass hierdurch die problemlose Entweichung des beim Mischvorgang zugegebenen Wassers beim Trockenvorgang ermöglicht wird. Die Kunststofffasern werden bei Temperaturen von etwa 120°C zerstört und hinterlassen feine Porenräume, durch die das Wasser beim Trocknen an die Außenseite des Betons wandern kann.

Das im Patentanspruch beschriebene Beimischen der Edelstahlfasern mit gebogenen Enden hat den Vorteil, dass eine zusätzliche Festigkeit ähnlich einer Armierung bei Stahlbeton im Baugewerbe bewirkt wird, die dem Beton zusätzliche Festigkeit gibt. Dies ist besonders erwähnenswert, dass - sollte einmal doch der Stein Risse bekommen und drohen auseinander zu brechen - der Stein in sich gehalten wird und nicht zerbricht. Das Auseinanderbrechen könnte im ungünstigsten Falle eine Beschädigung im Kessel hervorrufen, wenn keine Stahlfasern eingemischt worden sind. Zudem erhöhen sie noch das Raumgewicht des Steines und somit die Speicherfähigkeit.

Die im Patentanspruch beschriebene Trocknung und nicht das keramische Brennen der Speichersteine, die aus Beton gefertigt sind hat den Vorteil, dass diese energetisch günstiger ist und gleichzeitig ausreichend ist. Die Steine verfügen über ausreichend Festigkeit für den Transport und den anschließenden Einbau. Die Festigkeit erhöht sich während des Einsatzes im Heizungs-Kessel, da durch die Temperaturbeaufschlagung im Einsatz eine keramische Bindung und somit erhöhte Festigkeiten entstehen, die die Haltbarkeit des Steines erhöhen und somit eine längere Nutzung erreicht wird.

Die Erfindung schafft also eine Fertigungsmethode für die Herstellung von Wärmespeichersteinen, die eine einfache und kostengünstige Herstellung von hitzebeständigen, temperaturwechselbeständigen Wärmespeichersteinen mit hoher Wärmespeicherkapazität gewährleistet.

## Patentansprüche

1. Fertigungsmethode für die Herstellung von Wärmespeichersteinen, **dadurch gekennzeichnet, dass** der Feuerfest-Betonmischung neben Wasser Kunststofffaser in einem bestimmten Mischungsverhältnis beigegeben werden, weiterhin **dadurch gekennzeichnet, dass** Edelstahlfasern in einem bestimmten Mischungsverhältnis der Feuerfest-Betonmischung beigegeben werden, die gebogene Enden aufweisen und **dadurch gekennzeichnet, dass** die Wärmespeichersteine getrocknet werden.
